# EUROPEAN PATENT APPLICATION

(11) **EP 4 592 723 A1**
(43) Date of publication of application: **30.07.2025**
(21) Application number: 24218854.8
(22) Date of filing: 10.12.2024
(51) Int. Cl.: G02B 6/44

(54) **FLOATING CABLE SPOOL CONTAINMENT COVER AND METHOD OF OPERATION THEREOF**

(30) Priority: 24.01.2024 IN 202411004921
(71) Applicant: Sterlite Technologies Limited, Gurugram, Haryana 122102 (IN)
(72) Inventor: KUMAR, Sunil, 122102 Gurugram (IN); SHAH, Mohammad Rafique, 122102 Gurugram (IN); PATIL, Rushikesh, 122102 Gurugram (IN); ALSTON, Eric Emmanual, Lugoff, 29078 (US); GOPI, Ajaya Kumar, 122102 Gurugram (IN)
(74) Representative: Valet Patent Services Limited

(57) **Abstract**

Disclosed is an optical fiber cable storage device (100) having a cable winding spool (104) defined by a cylindrical storage structure (116) confined between a first side wall (106) and a second side (108) forming a circumferential region (118) between the first side wall (106) and the second side (108). The cylindrical storage structure (116) is adapted to receive the optical fiber cable (107) when the optical fiber cable (110) is wound on the cable winding spool (104). In particular, the storage device (100) has a floating cover (112) is loosely engaged between the first side wall (106) and the second side wall (108). Further, the floating cover (112) has a window region (114) and is configured to revolve around the cylindrical storage structure (116) while the optical fiber cable (110) is unwound through the window region (114).

## Description

### TECHNICAL FIELD

Embodiments of the present disclosure relate to the field of equipment for electric wires and electric cables in various sectors, such as construction or industry, and more particularly, relates to an optical fiber cable storage device with a cover unit and a cable unwinding feature without ripping off the cover unit of the storage device or the cable.

This application claims the benefit of Indian Application No. " IN202411004921" titled "OPTICAL FIBER CABLE STORAGE DEVICE AND A METHOD OF USE THEREOF" filed by the applicant on 24 January 2024, which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fibers are widely used for data transmission. Generally, the optical fibers are connected to each other via a connector assembly. With the advancement in communication technologies there is a need to deploy optical fiber cables in different geographies and different locations. For deploying an optical fiber cable, the optical fiber cable needs to be stored over a winding device and pulled out from the winding device by holding the device in a rotatable position. The optical fiber cables utilize strength member components which store energy when wound over a cable spool and unwinding the cables from the standard cable spools can result in an uncontrolled and tangled deployment and cause excessive delays. The uncontrolled and tangled deployment is due to a spring effect produced by the stored energy and hence, a cover is required over the wound cable spool portion. The cover is installed either in a fixed manner or in a floating manner over the cable spool.

Demand for fiber optic services is continuously increasing. In accommodating the need of current and future customers, fiber optic distribution cables are routed from a central office to extended areas. Providing fiber optic services to customers in some applications, such as to customers in a multiple dwelling unit, for example, involves splitting a fiber optic distribution cable into individual cables that are associated with a particular dwelling of the multiple dwelling unit.

In conventional arrangements, the distribution cable is routed from the central office to a large fiber distribution hub. The distribution cable is split out into a number of individual fiber optic cables at the fiber distribution hub. The individual fiber optic cables are then each routed to a wall-mount box (e.g., a floor box) located at the multiple dwelling unit. Subscriber cables are routed from the wall-mount box to one or more residences. The large fiber distribution hub is located remote from the wall-mount box. Typically, the fiber distribution hub splits out a number of multi-fiber distribution cables and feeds a number of wall-mount boxes.

Prior art reference "US10782499B2" discloses wall outlets having a base structure and a stationary spool structure having a hub portion such that a length of fiber optic cable is coiled about the hub portion between the first and second walls. A cover is also provided which covers at least a portion of the spool structure.

Another prior art reference "EP4220876A1" discloses a device for storing, transporting and installing electric wires or cables comprises at least one casing in the form of a wheel, through which passes a rotating shaft and containing a reel of wire or electric cable movable in rotation. around the rotating shaft. However, the fixed cover concept failed to deploy the cable properly without ripping the cover during an unwinding process.

In light of the above stated discussion, to overcome the above stated disadvantages there is a need for an optical fiber cable that is capable of solving aforementioned problems of the conventional optical fiber cable storage devices.

Thus, the present disclosure proposes a technical solution that overcomes the above-stated limitations in the prior arts by providing a cable storage device with a feature to deploy the optical fiber cable in a controlled way with tangling and ripping the spool cover.

### SUMMARY OF THE DISCLOSURE

Embodiments of the present disclosure relates to an optical fiber cable storage device comprising a cable winding spool defined by a cylindrical storage structure confined between a first side wall and a second side forming a circumferential region between the first side wall and the second side. In particular, the cylindrical storage structure is adapted to receive the optical fiber cable when the optical fiber cable is wound on the cable winding spool. The floating cover has a window region and is loosely engaged between the first side wall and the second side wall. Further, the floating cover is configured to revolve around the cylindrical storage structure while retaining a radial position between the first side wall and the second sidewall when the optical fiber cable is unwound through the window region.

According to the first aspect of the present disclosure, the floating cover is loosely engaged between the first side wall and the second sidewall at a pre-defined radial distance (D).

According to the second aspect of the present disclosure, the window has an edge guard. In particular, the edge guard while unwinding the optical fiber cable maintains the structural integrity of the window and prevents damages to the optical fiber cable.

According to the third aspect of the present disclosure, the floating cover is disposed at a minimum radial gap from an outer periphery of the optical fiber cable that is wound over the cable winding spool. Further, the minimum radial gap is at least two times the diameter of the optical fiber cable.

According to the fourth aspect of the present disclosure, the floating cover fully covers the circumferential region.

According to the fifth aspect of the present disclosure, the floating cover is made up of a flexible material selected from one of, a Polyethylene (PE) extrusion material, a PE foam material, or a combination thereof.

According to the sixth aspect of the present disclosure, the edge guard is made up of a low friction material selected from one of, a PE material, a Polyvinyl chloride (PVC) material, an Acrylonitrile butadiene styrene (ABS) material, or a combination thereof.

Another embodiment of the disclosure discloses a method of unwinding an optical fiber cable from a cable winding spool comprising mounting the cable winding spool on a stand to allow a rotational movement and pulling out the optical fiber cable through a window of a floating cover of the cable winding spool such that the floating cover revolves around the cylindrical storage structure while retaining a radial position between the first side wall and the second sidewall when the optical fiber cable is pulled through the window region.

According to the sixth aspect of the present disclosure, the window moves between -45 degrees to +45 degrees from the direction of pulling the optical fiber cable through the window during unwinding of the optical fiber cable.

The foregoing objectives of the present disclosure are attained by providing an optical fiber cable storage device and a method thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating an optical fiber cable storage device mounted on a stand in accordance with an embodiment of the present disclosure;
Fig. 1B is a pictorial snapshot illustrating an exploded view of the storage device in accordance with an embodiment of the present disclosure;
Fig. 2 is a pictorial snapshot illustrating top view of a floating cover of the storage device in accordance with an embodiment of the present disclosure;
Fig. 3 is a flow chart illustrating a method of unwinding an optical fiber cable from a cable winding spool in accordance with an embodiment of the present disclosure.

The optical fiber cable storage device illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

The term "optical fiber" as used herein refers to a light guide that provides highspeed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

The term "optical fiber cable" as used herein refers to a cable that encloses one or more optical fibers.

The term "cable winding spool" refers to a cylindrical component to wind optical fiber cable over its cylindrical surface for storage purpose.

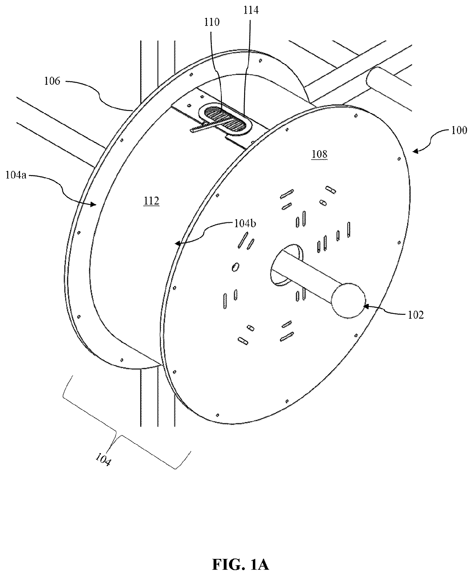

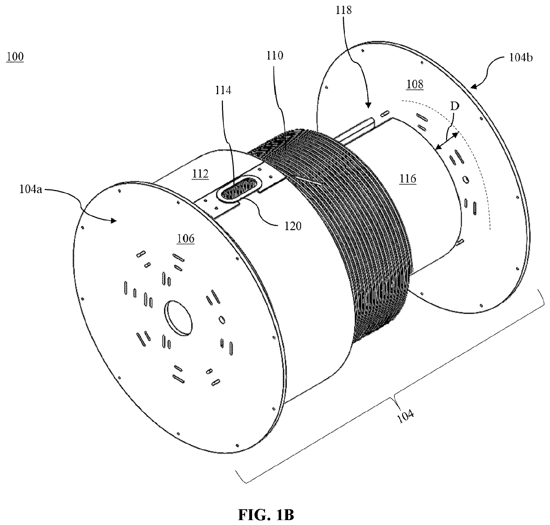

Fig. 1A is a pictorial snapshot illustrating an optical fiber cable storage device 100 mounted on a stand 102 in accordance with an embodiment of the present disclosure. The fiber cable storage device 100 (hereinafter interchangeably referred to as and designated as "the storage device 100") may be adapted to store optical fiber cables.

In some aspects of the present disclosure, a user may mount the storage device 100 on the stand 102 to allow a rotational movement of the cable storage device 100. Alternatively, the stand 102 may be designed to structurally support the storage device 100.

In accordance with an embodiment of the present invention, the stand 102 may be made up of a material such as, but not limited to, metal, wood, hardened plastic, and the like. Aspects of the present disclosure are intended to include and/or otherwise over any type of the material for the stand 102 that enables the stand 102 to rigidly support the storage device 100 thereupon, without deviating from the scope of the present disclosure.

The storage device 100 may include a cable winding spool 104 such that for storage, the optical fiber cable is wound over the winding spool 104. In particular, the winding spool 104 may have a first side 104a and a second side 104b. Specifically, the first side 104a may include a first side wall 106 and the second side 104b may include a second sidewall 108. In some aspects of the present disclosure, the first side wall 106 and the second sidewall 108 may have a shape such as, but not limited to, a circular shape, an oval shape, and the like. Aspects of the present disclosure are intended to include and/or otherwise cover any type of the shape for the first sidewall 106 and the second sidewall 108, without deviating from the scope of the present disclosure.

In accordance with an embodiment of the present invention, the storage device 100 may further have a floating cover 112 wrapped over the optical fiber cable 110 when the optical fiber cable 110 is wound over the cable winding spool 104. In particular, the floating cover 112 may be a rectangular sheet that may be removably attached between the first sidewall 106 and the second sidewall 108 of the cable winding spool 104. The floating cover 112 may have a window 114 such that the window 114 is created over the floating cover 112. Further, the window 114 may be adapted to enable a user to pull out at least one end of the optical fiber cable 110 while wrapping the floating cover 112 over the cable winding spool 104.

1B is a pictorial snapshot illustrating an exploded view of the storage device in accordance with an embodiment of the present disclosure. As discussed in FIG. 1A, the storage device 100 may include the cable winding spool 104 such that for storage, the optical fiber cable 110 is wound over the winding spool 104. The cable winding spool 104 may be defined by a cylindrical storage structure 116 confined between the first side 104a (*i.e*., the first wall 106) and the second side 104b (i.e., the second wall 108) thus, forming a circumferential region 118 between the first side 104a (*i.e.*, the first wall 106) and the second side 104b (*i.e*., the second wall 108). Particularly, the cylindrical storage structure 116 forming the circumferential region 118 between the first side 104a and the second side 104b may be adapted to receive the optical fiber cable 110 when the optical fiber cable 110 is wound on the cable winding spool 104 for storage. Further, the first sidewall 106 and the second sidewall 108 may have first and second diameters, respectively.

In accordance with an embodiment of the present invention, the first diameter and the second diameter may be the same. In alternative embodiments of the present disclosure, the first diameter and the second diameter may be different.

In particular, the first diameter of the first side wall 106 and the second diameter of the second side wall 108 are greater than the diameter of the cable winding spool 104 such that the first sidewall 106 and the second sidewall 108 creates flanges at both the first side 104a and the second side 104b of the cable winding spool 104. In operation, for storage of an optical fiber cable 110 in the storage device 100, the optical fiber cable 110 may be wound over the cable winding spool 104 between the first sidewall 106 and the second sidewall 108.

In accordance with an embodiment of the present invention, the optical fiber cable 110 may be, but not limited to, a flat cable, a round cable, an optical fiber ribbon, and the like. Aspects of the present disclosure are intended to include and/or otherwise cover any type of the optical fiber cable 110, without deviating from the scope of the present disclosure.

Further, the floating cover 112 may be loosely engaged between the first side wall 106 and the second sidewall 108. In particular, the floating cover 112 may be adapted to revolve around the cylindrical storage structure 116 while retaining a radial position between the first sidewall 106 and the second sidewall 108 when the optical fiber cable 110 is unwound through the window region 114.

In accordance with an embodiment of the present invention, the floating cover 112 may be wrapped over the cable winding spool 104 in such a way that a gap is created between the floating cover 112 and an outer periphery of the optical fiber cable 110 that is wound over the cable winding spool 104.

In some aspects of the present disclosure, the floating cover 112 may be engaged over the cable winding spool 104 at a pre-defined radial distance (D) from the center of the cable winding spool 104. Aspects of the present disclosure are intended to include and/or otherwise cover any value for the pre-defined radial distance (D) depending on different sized cable winding reels, without deviating from the scope of the present disclosure.

In accordance with an embodiment of the present invention, the floating cover 112 may be loosely engaged to provide a floating effect over the cable winding spool 104, after winding of the optical fiber cable 110. In particular, the floating cover 112 may be disposed at a minimum radial gap from an outer periphery of the optical fiber cable 110 that is wound over the cable winding spool 104. Moreover, the minimum radial gap may be at least two times the diameter of the optical fiber cable 110. Further, the radial gap may enable the loose engagement of the floating cover 112 that provides the floating effect over the cable winding spool 104, after winding of the optical fiber cable 110.

For example, when the optical fiber cable 110 with a cable diameter of 5 millimeters (mm) is wound over the cable winding spool 104, the gap between the floating cover 112 and the outer periphery of the optical fiber cale 110 may be at-least 10 mm for a better unwinding process.

In accordance with an embodiment of the present invention, the window 114 may include an edge guard 120 mounted over a plurality of edges of the window 114 of the floating cover 112. Particularly, the edge guard 120 may be adapted to protect the floating cover 112 and the optical fiber cable 110 from ripping, while pulling-out the optical fiber cable 110 from the window 114 during the unwinding process of the optical fiber cable 110. Moreover, the floating cover 112 may be made up of a material which is flexible enough to be wrapped around the cable winding spool 104, robust enough to not get ripped while rotating the cable winding spool 104, weighted lightly to provide smooth cable unwinding process, and maintain floating property of the floating cover 112 during the unwinding process of the optical fiber cable 110. Further, the floating cover 112 may be made up of a flexible material such as, but not limited to, a Polyethylene (PE) extrusion material, a PE foam material, and the like. Aspects of the present disclosure are intended to include and/or otherwise cover any type of the material for the floating cover 112, including known, related, and/or later developed materials, without deviating from the scope of the present disclosure.

In accordance with an embodiment of the present invention, the edge guard 120 may be provided to cover the plurality of edges of the window 114 created over the floating cover 112. Particularly, the edge guard 120 may be adapted to maintain a structural integrity of the window 114 by preventing the window 114 from getting damaged through the optical fiber cable 110 during the unwinding process of the optical fiber cable 110. Moreover, the edge guard 120 may be required to be made of a material with low friction coefficient for easy pulling of the optical fiber cable 110 during the unwinding process of the optical fiber cable 110 through the window 114. Further, the edge guard 120 may be made up of a low friction material such as, but not limited to, a PE material, a Polyvinyl chloride (PVC) material, an Acrylonitrile butadiene styrene (ABS) material, and the like. Aspects of the present disclosure are intended to include and/or otherwise cover any type of the material for the edge guard 120, including known, related, and/or later developed materials, without deviating from the scope of the present disclosure.

In accordance with an embodiment of the present invention, the window 114 may be positioned over the floating cover 112 in such a way that the position of the window 114 may be the same as a direction of pulling of the optical fiber cable 110 during the unwinding process of the optical fiber cable 110.

In accordance with an embodiment of the present invention, the position of the window 114 may be movable over the floating cover 112 between -45 degrees to +45 degrees along an axis of the pulling direction of the optical fiber cable 110 during the unwinding process of the optical fiber cable 110.

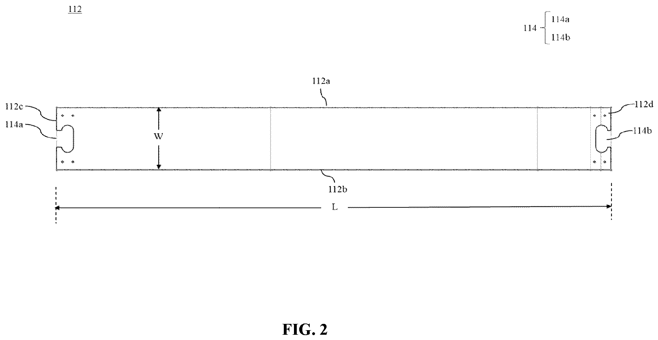

Fig. 2 is a pictorial snapshot illustrating the top view of a floating cover of the storage device in accordance with an embodiment of the present disclosure. In particular the floating cover 112 may be loosely engaged between the first sidewall 106 (as shown on FIG. 1A and FG. 1B) and the second sidewall 108 (as shown on FIG. 1A and FG. 1B). moreover, the floating cover 112 may be adapted to revolve around the cylindrical storage structure 116 (as shown on FIG. 1A and FG. 1B) while retaining a radial position between the first sidewall 106 and the second sidewall 108 when the optical fiber cable 110 (as shown on FIG. 1A and FG. 1B) is unwound through window 114. Further, the window 114 may be present over an edge of the floating cover 112. In some other aspects of the present disclosure, the window 114 may be present in the middle of the floating cover 112.

In accordance with an embodiment of the present invention, the floating cover 112 may have first and second long edges 112a and 112b and first and second short edges 112c and 112d. Particularly, the first and second long edges 112a and 112b may be parallel to each other. Similarly, the first and second short edges 112c and 112d may be parallel to each other. Further, the first and second long edges 112a and 112b may be orthogonal to the first and second short edges 112c and 112d.

Further for installation of the floating cover 112, the first and second short edges 112c and 112d of the floating cover 112 may be fastened together to wrap the floating cover 112 over the cable winding spool 104. Specifically, the first and second short edges 112c and 112d of the floating cover 112 may be fastened together by way of one or more fastening mechanisms.

In accordance with an embodiment of the present invention, the one or more fastening mechanisms may include, but is not limited to, one or more cable ties, adhesive material, welding process, and the like. Aspects of the present disclosure are intended to include and/or otherwise cover any type of the one or more fastening mechanisms, without deviating from the scope of the present disclosure. As illustrated, the first and second short edges 112c and 112d of the floating cover 112 may have first and second window portions 114a and 114b such that when the first and second short edges 112c and 112d of the floating cover 112 are fastened together, the first and second window portions 114a and 114b forms the window 114.

Although FIG. 2 illustrates that window 114 is formed by the first and second window portions 114a and 114b disposed on the first and second short edges 112c and 112d, respectively, it will be apparent to a person skilled in the art that the scope of the present disclosure is not limited to it. In various other aspects of the present disclosure, the window 114 may be provided at any position along a length of the floating cover 112, without deviating from the scope of the present disclosure.

In accordance with an embodiment of the present invention, the floating cover 112 may have a length (L) such that the length (L) is enough to fully cover a circumference of the cable winding spool 104 after winding of the optical fiber cable 110. Further, the floating cover 112 may have a width (W).

In accordance with an embodiment of the present invention, the width (W) of the floating cover 112 may be provided in a way such that the floating cover 112 partially covers an area between the first sidewall 106 and the second side wall 108 of the cable winding spool 104. In some other aspects of the present disclosure, the width (W) of the floating cover 112 may be provided in a way such that the floating cover 112 fully covers an area between the first sidewall 106 and the second side wall 108 of the cable winding spool 104 (as shown on FIG. 1A and FG. 1B).

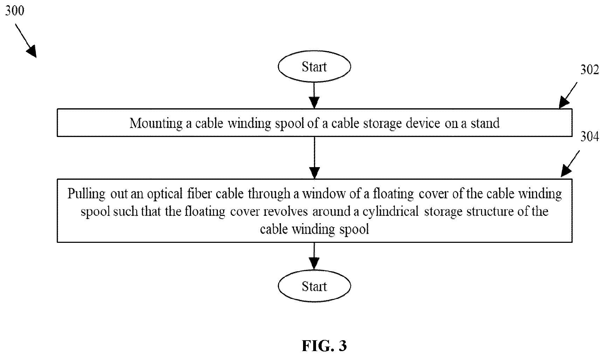

Fig. 3 is a flow chart illustrating a method of unwinding an optical fiber cable from a cable winding spool in accordance with an embodiment of the present disclosure.

At step 302, a user may mount the cable winding spool 104 of the cable storage device 100 on a stand 102 to allow a rotational movement of the cable storage device 100. In particular, the cable winding spool 104 may be defined by the cylindrical storage structure 116. The cylindrical storage structure 116 may be confined between the first sidewall 106 and the second sidewall 108 of the cable winding spool 104 thus forming a circumferential region 118 between the first sidewall 106 and the second sidewall 108. Further, the cylindrical storage structure 116 may be utilized by the user to wound the optical fiber cable 110.

At step 304, the user may pull out the optical fiber cable 110 through the window 114 of the floating cover 112 of the cable winding spool 104 such that the floating cover 112 revolves around the cylindrical storage structure 116 and the floating cover 112 retains a radial position between the first sidewall 106 and the second sidewall 108 when the optical fiber cable 110 is pulled through the window region 114. In particular, the window (114) may be adapted to move between -45 degrees to +45 degrees from the direction of pulling the optical fiber cable 110 through the window 114 during unwinding of the optical fiber cable 110.

Advantageously, the fiber cable storage device 100 may provide an easy and convenient way to store the optical fiber cable 110. Moreover, the floating cover 112 may be loosely engaged to provide a floating effect over the cable winding spool 104, after winding of the optical fiber cable 110. Further, the window 114 may be positioned over the floating cover 112 in such a way that the position of the window 114 may be the same as a direction of pulling of the optical fiber cable 110 during the unwinding process of the optical fiber cable 110. The window 114 may have the edge guard 120 that may be provided to cover the plurality of edges of the window 114 created over the floating cover 112. Specifically, the edge guard 120 may be adapted to maintain a structural integrity of the window 114 by preventing the window 114 from getting damaged through the optical fiber cable 110 during the unwinding process of the optical fiber cable 110.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable storage device (100) **characterized in that**:
a cable winding spool (104) defined by a cylindrical storage structure (116) confined between a first side wall (106) and a second side (108) forming a circumferential region (118) between the first side wall (106) and the second side (108),
wherein the cylindrical storage structure (116) is adapted to receive the optical fiber cable (110) when the optical fiber cable (110) is wound on the cable winding spool (104); and
a floating cover (112) having a window region (114), wherein the floating cover (112) is loosely engaged between the first side wall (106) and the second side wall (108), and
wherein the floating cover (112) is configured to revolve around the cylindrical storage structure (116) while retaining a radial position between the first side wall (106) and the second side wall (108) when the optical fiber cable (110) is unwound through the window region (114).

2. The optical fiber cable storage device (100) of claim 1, wherein the floating cover (112) is loosely engaged between the first side wall (106) and the second side wall (108) at a pre-defined radial distance (D).

3. The optical fiber cable storage device (100) of claim 1, wherein the window (114) has an edge guard (120), wherein the edge guard (120), while unwinding the optical fiber cable (110) maintains a structural integrity of the window (114) and prevents damages to the optical fiber cable (110).

4. The optical fiber cable storage device (100) of claim 1, wherein the floating cover (112) is disposed at a minimum radial gap from an outer periphery of the optical fiber cable (110) that is wound over the cable winding spool (104), wherein the minimum radial gap is at least two times of a diameter of the optical fiber cable (110).

5. The optical fiber cable storage device (100) of claim 1, wherein the floating cover (112) fully covers the circumferential region (118).

6. The optical fiber cable storage device (100) of claim 1, wherein the floating cover (112) is made up of a flexible material selected from one of, a Polyethylene (PE) extrusion material, a PE foam material, or a combination thereof.

7. The optical fiber cable storage device (100) of claim 1, wherein the edge guard (120) is made up of a low friction material selected from one of, a PE material, a Polyvinyl chloride (PVC) material, an Acrylonitrile butadiene styrene (ABS) material, or a combination thereof.

8. A method (300) of unwinding an optical fiber cable (110) from a cable winding spool (104), wherein the method (300) comprising:
mounting the cable winding spool (104) on a stand (102) to allow a rotational movement, wherein the cable winding spool (104) is defined by a cylindrical storage structure (116) confined between a first side wall (106) and a second side wall (108) forming a circumferential region (118) between the first side wall (106) and the second side wall (108); and
pulling out the optical fiber cable (110) through a window (114) of a floating cover (112) of the cable winding spool (104) such that the floating cover (112) revolves around the cylindrical storage structure (116) while retaining a radial position between the first side wall (106) and the second side wall (108) when the optical fiber cable (110) is pulled through the window region (114).

9. The method (300) of claim 8, wherein the window (114) moves between -45 degrees to +45 degrees from the direction of pulling the optical fiber cable (110) through the window (114) during unwinding of the optical fiber cable (110).

10. The method (300) of claim 8, wherein the floating cover (112) is loosely engaged between the first side wall (106) and the second side wall (108) at a pre-defined radial distance (D).

11. The method (300) of claim 8, wherein the window (114) has an edge guard (120), where the edge guard (120), while unwinding the optical fiber cable (110) maintains a structural integrity of the window (114) and prevents damages to the optical fiber cable (110).

12. The method (300) of claim 8, wherein the floating cover (112) is disposed at a minimum radial gap from an outer periphery of the optical fiber cable (110) that is wound over the cable winding spool (104), wherein the minimum radial gap is at least two times of a diameter of the optical fiber cable (110).

13. The method (300) of claim 8, wherein the floating cover (112) fully covers the circumferential region (118).

14. The method (300) of claim 8, wherein the floating cover (112) is made up of a flexible material selected from one of, a Polyethylene (PE) extrusion material, a PE foam material, or a combination thereof.

15. The method (300) of claim 8, wherein the edge guard (120) is made up of a low friction material selected from one of, a PE material, a Polyvinyl chloride (PVC) material, an Acrylonitrile butadiene styrene (ABS) material, or a combination thereof.
